## Europäisches Patentamt
## European Patent Office
## Office européen des brevets

(19)

(11) Veröffentlichungsnummer: **0 097 640**
**B1**

(12) **EUROPÄISCHE PATENTSCHRIFT**

(45) Veröffentlichungstag der Patentschrift:
**23.10.85**

(51) Int. Cl.⁴: **F 16 L 59/14**

(21) Anmeldenummer: **83890100.7**

(22) Anmeldetag: **17.06.83**

(54) Segment für einen Isoliermantel, sowie Verfahren zu dessen Herstellung.

(30) Priorität: **22.06.82 AT 2418/82**
**30.05.83 AT 1975/83**

(43) Veröffentlichungstag der Anmeldung:
**04.01.84 Patentblatt 84/1**

(45) Bekanntmachung des Hinweises auf die Patenterteilung:
**23.10.85 Patentblatt 85/43**

(84) Benannte Vertragsstaaten:
**BE DE FR GB NL SE**

(56) Entgegenhaltungen:
**DE - A - 2 236 375**
**DE - A - 2 413 133**
**DE - A - 2 541 373**
**DE - B - 1 212 370**
**DE - C - 62 953**
**GB - A - 1 473 855**
**US - A - 3 095 337**

(73) Patentinhaber: **Österreichische Salen-Kunststoffwerk Gesellschaft m.b.H., Kaiserstrasse 45, A-1072 Wien (AT)**

(72) Erfinder: **Ratschmann, Gerhold, Dipl.-Ing., Admonterstrasse 20, A-3500 Krems (AT)**
Erfinder: **Kistenich, Johannes, Mitteraustrasse 9, A-3500 Krems (AT)**

(74) Vertreter: **Haffner, Thomas M., Dr. et al, Patentanwaltskanzlei Dipl.-Ing. Adolf Kretschmer Dr. Thomas M. Haffner Schottengasse 3a, A-1014 Wien (AT)**

## Beschreibung

Die Erfindung bezieht sich auf ein Segment für einen aus aneinander anschließbaren und relativ zueinander abwinkelbaren Segmenten bestehenden Isoliermantel für Medienrohre, insbesondere Fernheizungsleitungen, aus geschäumtem, wärmedämmendem Material, insbesondere Polyurethanhartschaum, welche Segmente vorzugsweise von einem flexiblen Hüllrohr oder Hüllschlauch umgeben sind, sowie auf ein Verfahren zu dessen Herstellung.

Insbesondere für flexible, wärmeisolierte Medienleitungen, wie sie für Fernheizungen Verwendung finden, wurde bereits vorgeschlagen, Medienrohre aus Kunststoff, beispielsweise vernetztem Polyäthylen, mit einem das Medienrohr umschließenden Kunststoffschaum zu isolieren. Als Medienrohre wurden neben Kunststoffen auch bereits Kupferrohre oder Weicheisenrohre eingesetzt. Die wärmeisolierte Leitung soll hiebei für die Verbindung von Verteilerstationen zu den Hausanschlüssen verwendet werden können. In derartigen Verteilerstationen wird das aus Fernheizleitungen, welche in der Regel aus Stahlguß od. dgl. bestehen, unter hohem Druck angeförderte heiße Medium bereits weitgehend entspannt und mit kaltem Medium zur Einstellung von Temperaturen unter 100°C vermischt, worauf der Transport unter wesentlich verringertem Druck, in der Regel einem Druck von 2 bis 5 bar, zu den Hausanschlüssen erfolgt. Bisher wurden für den Bereich zwischen Verteiler und Hausanschlüssen gleichfalls Stahl- oder Gußrohre eingesetzt, da derartige Leitungen unter der Erdoberfläche verlegt werden und daher über eine entsprechend hohe Druckfestigkeit verfügen müssen. Die Verlegung von derartigen Rohren ist aber nur mit beschränkter Länge der einzelnen Rohrschüsse möglich, so daß für die oftmals langen Verbindungen zwischen den Verteilern und den Hausanschlüssen eine große Anzahl von Rohrverbindern und Fittings erforderlich ist. Derartige Rohrverbinder verteuern die Verlegung dieser Leitungen wesentlich und stellen darüber hinaus ein zusätzliches Isolationsproblem dar.

Aus der DE-A-2 413 133 ist bereits ein biegsames Verbundrohr aus Kunststoff bekannt, welches aus einem Innenrohr aus einem vernetzten Polyolefin und einer äußeren Schaumstoffumkleidung besteht. Die Schaumstoffumkleidung ist bei diesem Rohr in keiner Weise gegen Kompression in radialer Richtung geschützt, so daß eine einwandfreie Isolation bei einer Verlegung unterhalb der Erdoberfläche nicht gewährleistet ist. Es ist weiters aus der DE-A-2 236 375 bereits ein mehrschichtiges Rohr bekannt, welches einen inneren Polyolefinmantel, beispielsweise aus Polybuten, aufweist. Dieser innere Mantel ist mit einem äußeren Polyamidmantel zur Verbesserung der mechanischen und thermischen Belastbarkeit verbunden. Dieses bekannte Rohr war jedoch nicht als isolierte Medienleitung ausgebildet. Darüber hinaus ist ein derartiges Rohr bei starrer Verbindung des äußeren Mantels mit dem inneren Rohr nicht mehr in einem für ein Aufrollen geeigneten Ausmaß flexibel.

Zur Verbesserung der Flexibilität und zur Verringerung der Herstellungskosten derartiger flexibler Rohre wurde bereits vorgeschlagen, den isolierten Mantel in aneinander anschließende Segmente zu unterteilen, welche auf das Medienrohr aufgeschoben wurden und von einem Hüllrohr bzw. Hüllschlauch umgeben wurden. Die Anlenkung der einzelnen Segmente aneinander erlaubte eine Abwinkelung der Achsen der Segmente zueinander. Bei diesen vorbekannten Segmenten handelt es sich im wesentlichen um zylindrische, geschäumte Abschnitte, welche bei Abwinkelung benachbarter Segmente zueinander mit ihrer Innenkante eine Verringerung des lichten Durchtrittsquerschnittes für das Medienrohr und mit ihrer Außenkante eine Vergrößerung des lichten Querschnittes des Hüllrohres bedingte. Die auf diese Weise erforderliche Überdimensionierung sowohl des Hüllrohres als auch des lichten Querschnittes des isolierten Mantels führte bei gegebenem Außendurchmesser des Hüllrohres zu einer Verschlechterung des Wärmedämmwertes gegenüber durchgehend ausgeschäumten flexiblen Leitungen. Darüber hinaus waren die isolierenden Segmente, welche aus Polyurethanhartschaum bestanden, an ihrer Berührungsstelle mit benachbarten Segmenten bei einer Abwinkelung der gesamten Rohrleitung in hohem Maße mechanisch belastet, so daß das Material des Isoliermantels relativ dicht gewählt werden muß und damit geringere Wärmedämmwerte aufweist als vergleichsweise leichteres Schaummaterial mit geringerer mechanischer Belastbarkeit. Aufgabe der Erfindung ist es, bei kleinem Duchmesser der Segmente eine Biegung des von den Segmenten umschlossenen Rohres zu ermöglichen und ein Abwinkeln der Segmente relativ zueinander zu ermöglichen, ohne daß ein größerer Innendurchmesser des Hüllrohres erforderlich ist als derjenige Innendurchmesser, der dem größten Durchmesser der Segmente entspricht. Erfindungsgemäß soll somit eine Isolation geschaffen werden, die bei möglichst geringen Außenabmessungen günstige Wärmedämmeigenschaften ergibt. Zur Lösung dieser Aufgabe besteht die Erfindung im wesentlichen darin, daß die Innenfläche und die Außenfläche des Segmentes als Rotationskörper mit gekrümmten Erzeugenden ausgebildet sind und im wesentlichen tonnenförmige Gestalt aufweisen, so daß — wenn der Leitung eine Krümmung aufgegeben wird — das Medienrohr an der tonnenförmigen Innenfläche (2') und der Hüllschlauch an der tonnenförmigen Außenfläche (3) der abgewinkelten Segmente (1) bei entsprechendem Krümmungsverlauf der Leitung anlegbar ist, so daß das Medienrohr und die Abwinklungen der Segmente relativ geringen mechanischen Belastungen unterworfen sind. Durch die im wesentlichen tonnenförmige Gestalt der Außenfläche ergibt sich bei einer Abwinkelung von zwei aneinander anschließenden Segmenten relativ zueinander keine Notwendigkeit für eine Vergrößerung des Innendurchmessers des Hüllrohres oder Hüllschlauches. Derartige Hüllrohre oder Hüllschläuche können in besonders einfacher Weise aus gewelltem PVC, vorzugsweise schlagzähem PVC, oder Polyäthylen bestehen und schützen den Außenmantel der isolierenden Segmente gegen mechanische Beschädigung, ohne die Aufrollbarkeit und damit die Vereinfachung der Verlegearbeiten zu beeinträchtigen. Durch die bevorzugte Ausgestaltung der Enden dieser Segmente mit sich konisch nach außen hin erweiternder Innenfläche ergeben sich nur geringe mechanische Belastungen des Medienrohres bei einem Abwinkeln der Segmente und es wird vor allen Dingen die Einführung des oder der Medienrohre(s) in die Segmente erleichtert. Die Medienleitung(en) im Inneren der Segmente kann (können) sich hiebei an der gleichfalls im wesentlichen tonnenförmig ausgebildeten Innenfläche der abwinkelbaren Segmente entsprechend dem Krümmungsverlauf der Fernheizungsleitung od. dgl. anlegen.

Um einen Isolierschaum mit geringem Raumgewicht verwenden zu können, ist die Ausbildung vorzugsweise so getroffen, daß die Innenfläche der Segmente als Schale, beispielsweise aus Metall, insbesondere Aluminium, oder aus Kunststoff, insbesondere einem mit einem reflektierenden Anstrich oder reflektierenden Pigmenten versehenen Kunststoff, ausgebildet ist und mit Kupplungsgliedern für den abwinkelbaren Anschluß benachbarter Segmente verbunden ist. Die mechanische Festigkeit der Segmente wird hiebei in hohem Maß durch die von der Schale gebildete Innenfläche der Segmente sichergestellt und diese Innenfläche kann einstückig mit in entsprechenden Gegenstücken der benachbarten Segmente verrastbaren Kupplungsstücken ausgebildet werden, wodurch auch ein gewisses Maß an Zugfestigkeit sichergestellt wird. Zur weiteren Verbesserung der Wärmedämmeigenschaften kann diese Innenfläche wärmereflektierend ausgebildet sein. Die Verwendung einer derartigen Stützschale als Innenfläche erlaubt die bevorzugte Weiterbildung des erfindungsgemäßen Segmentes, gemäß welcher der die Innenfläche der Segmente umgebende Mantel aus geschlossenporigem, geschäumtem Polyurethanhartschaum mit einem Raumgewicht von 35 bis 60 kg/m³ besteht.

Das Segment weist vorzugsweise an beiden Enden einander umgreifende kugelförmige bzw. hohlkugelförmige Kupplungsglieder auf. Bei aneinander angelenkten Segmenten umgreift hiebei das hohlkugelförmige Kupplungsglied das kugelförmige Kupplungsglied, wodurch die Segmente leicht relativ zueinander abgewinkelt werden können. Gemäß einer bevorzugten Ausführungsform der Erfindung ist auch die Außenfläche der Segmente von einer Schale gebildet, wobei die die Außenfläche bildende äußere Schale und die die Innenfläche bildende innere Schale das geschäumte Material allseitig umschließen. Auf diese Weise wird ein Schutz des Segmentes gegen mechanische Beschädigung von außen geschaffen. Das geschäumte Material wird durch die äußere Schale vor Sonnenlicht und Feuchtigkeit geschützt und es wird dadurch die Lebensdauer des Kunststoffschaumes vergrößert. Dadurch, daß das Schaummaterial innen und außen von Kunststoffschalen ummantelt ist, wird im Falle eines Rohrbruches das Eindringen von Feuchtigkeit in den Schaum vermieden. Die Isolierung wird in einem solchen Fall nicht beschädigt und es ist nun möglich, das zu isolierende Rohr oder den Schlauch einfach aus den Segmenten herauszuziehen und zu erneuern. Bei im Erdreich verlegten Leitungen werden hiedurch Grabarbeiten zur Behebung des Schadens weitgehend überflüssig gemacht.

Hiebei sind zweckmäßig die äußere Schale und die innere Schale von getrennten und zusammengesteckten Teilen gebildet, wodurch sich eine einfache Konstruktion und Herstellungsweise ergibt.

Gemäß einer bevorzugten Ausführungsform der Erfindung ist hiebei die Anordnung so getroffen, daß das umgriffene Kupplungsglied mit der äußeren Schale und das umgreifende Kupplungsglied mit der inneren Schale aus einem Stück besteht, und die innere Schale in das umgriffene Kupplungsglied unter Freilassung eines Zwischenraumes für das geschäumte Material hineinragt und die äußere Schale das umgreifende Kupplungsglied unter Freilassung eines Zwischenraumes für das geschäumte Material umgreift. Auf diese Weise sind beide Kupplungsglieder jeweils mit einer Schale verbunden, so daß eine feste Anlenkung der Segmente aneinander erreicht wird, und es wird auch im Bereich dieser Kupplungsglieder eine Wärmeisolierung durch das geschäumte Material erreicht.

Gemäß der Erfindung kann die Ausbildung so getroffen sein, daß die äußere Schale an der freien Stirnfläche des umgriffenen Kupplungsgliedes die innere Schale umgreift und an der freien Stirnfläche des umgreifenden Kupplungsgliedes mit der inneren Schale stumpf zusammenstößt. Die beiden Schalen können somit in einfacher Weise ineinandergesteckt werden, wobei dadurch, daß an der einen Stirnfläche die äußere Schale die innere Schale umgreift, die genaue Lage der beiden Schalen zueinander fixiert ist, so daß sich ein ausschäumbarer Hohlraum ergibt und ein ungenaues Zusammenstecken der beiden Schalen verhindert wird.

Als Material für die innere und die äußere Schale ist thermoplastischer Kunststoff, vorzugsweise Polypropylen, verwendbar. Es können auch die innere und äußere Schale einstückig miteinander ausgebildet sein, wobei die Herstellung in diesem Fall in einfacher Weise durch Blasen oder Sintern in einer Form erfolgen kann. Der verbleibende Hohlraum kann dann anschließend ausgeschäumt werden.

Die Herstellung von Segmenten, bei welchen nur die Innenfläche als Schale ausgebildet ist, kann erfindungsgemäß in besonders einfacher Weise so erfolgen, daß in einem ersten Arbeitsgang ein Innenmantel mit gekrümmten Erzeugenden und im wesentlichen tonnenförmiger Gestalt sowie an diesem Innenmantel, vorzugsweise einstückig mit diesem, Kupplungsstücke ausgebildet werden und daß anschließend unter Verwendung des Innenmantels als Formkern auf den Innenmantel Kunststoff aufgeschäumt wird. Die die Innenfläche bildende Schale dient hiebei als Stützkörper und Formkern für die Aufschäumung des Isoliermantels und es kann hiebei in einem ersten Arbeitsgang auch für die Ausbildung der gewünschten Kupplungsstücke Sorge getragen werden. In besonders einfacher Weise kann die Innenschale durch Blasen von Kunststoff in einer Form hergestellt werden, mit welcher auch die Kupplungteile ausgebildet werden, wobei die Enden der auf diese Weise hergestellten Innenschale abgelängt werden. Um die Innenschale mit geringer Wandstärke ausbilden zu können, wird vorzugsweise so vorgegangen, daß der Innenmantel während des Aufschäumens unter einem Innendruck gehalten und, insbesondere durch Einblasen von Druckluft, gestützt wird. Auf diese Weise wird ein Teil der erforderlichen Stützkraft während des Schäumens durch die Druckluft od. dgl. gewährleistet. Nach dem Aushärten des Schaumes und insbesondere nach dem Abkühlen besitzt auch ein entsprechend dünner Innenmantel die erforderliche Festigkeit, um Beschädigungen des Schaummantels zu verhindern.

Das erfindungsgemäße Verfahren zur Herstellung eines Segmentes mit Innenschale und Außenschale ist im wesentlichen dadurch gekennzeichnet, daß die äußere Schale über die innere Schale gesteckt und der Zwischenraum zwischen den beiden Schalen über eine zweckmäßig in der äußeren Schale vorgesehene Öffnung mit Kunststoff, beispielsweise geschlossenporigem Polyurethanhartschaum, ausgeschäumt wird. Die Schalen bilden somit außen und innen selbst verlorene Formteile und die Form, in welcher die Ausschäumung erfolgt, wird durch den Kunststoff nicht berührt. Es ist somit ein Aufbringen von Formtrennmittel in die Form überflüssig und es entfällt das aufwendige Säubern der Form von angeklebten Schaumresten nach jedem Formvorgang. Hiebei kann gemäß der vorliegenden Erfindung die äußere Schale ebenso wie die innere Schale durch Blasen von Kunststoff in einer Form hergestellt werden, mit welcher auch die Kupplungteile ausgebildet werden. In ähnlicher Weise kann auch vorgegangen werden, wenn Innen- und Außenschale aus einem Stück bestehen.

In der Zeichnung ist die Erfindung an Hand von Ausführungsbeispielen erläutert.

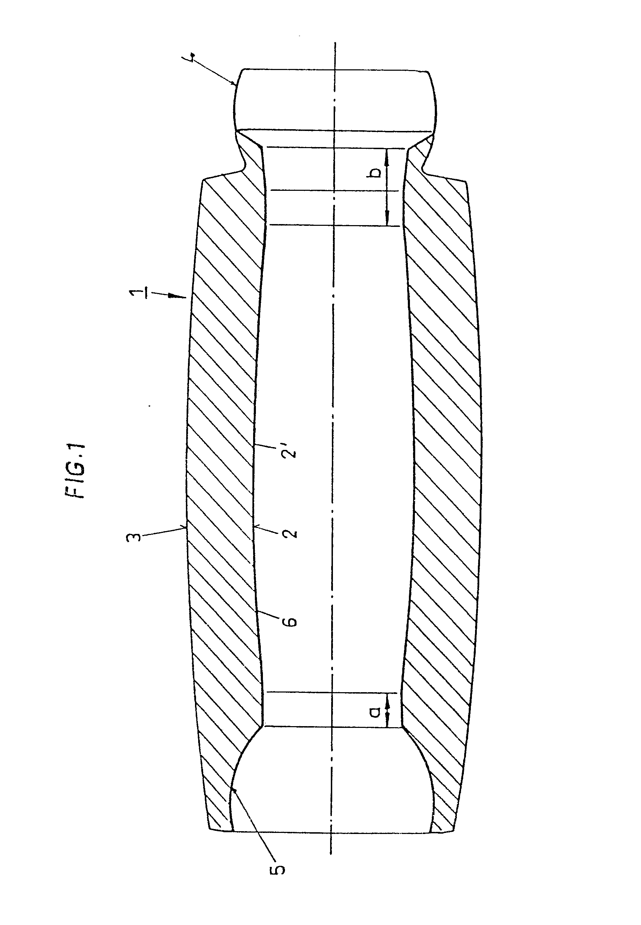

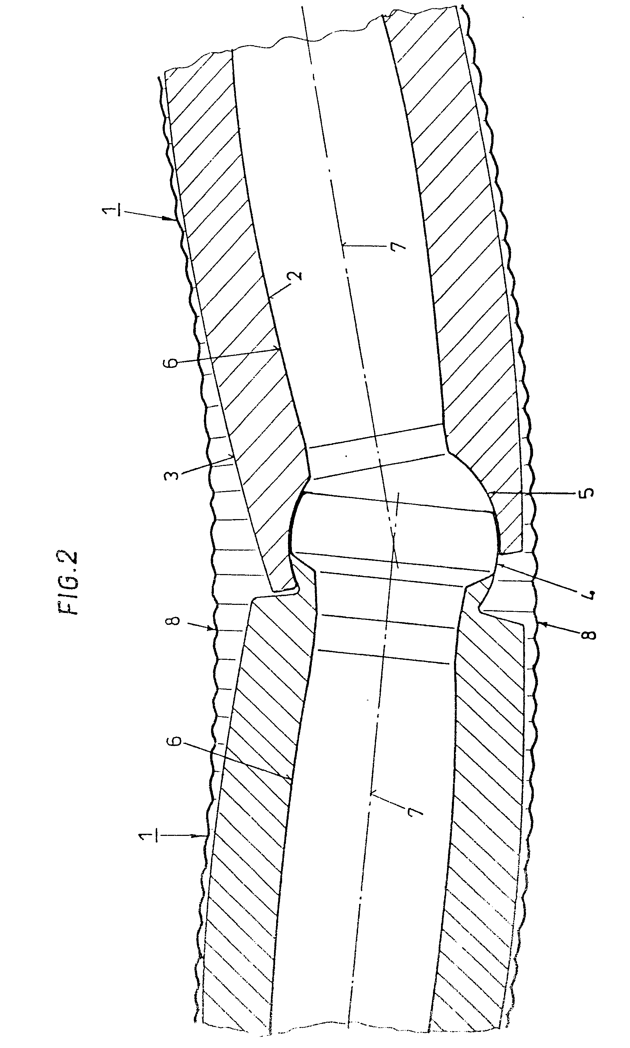

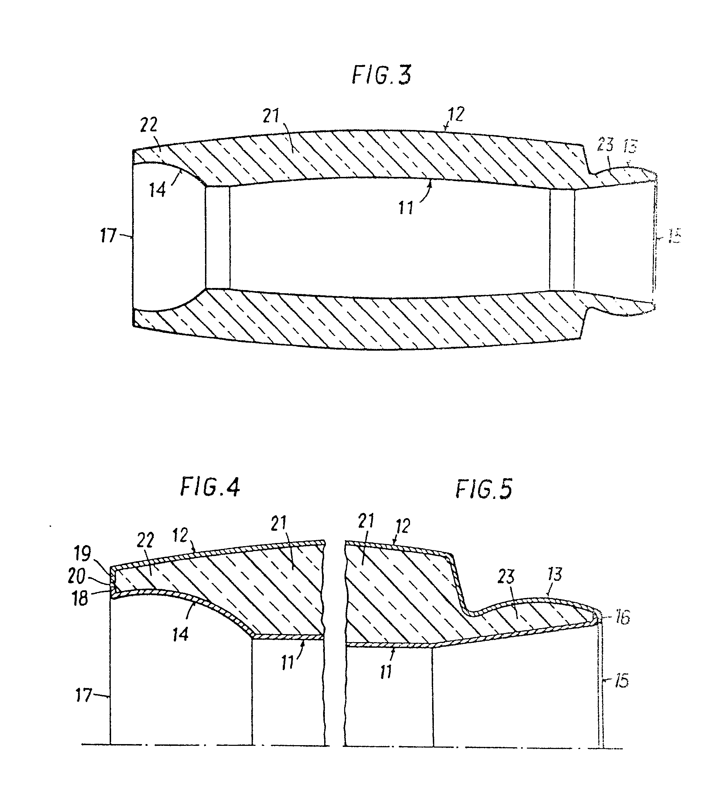

Fig. 1 zeigt einen Axialschnitt durch ein Segment mit Innensschale und Fig. 2 die Anlenkung zweier aneinander anschließender Segmente gemäß Fig. 1 zur Herstellung eines Isoliermantels für Rohre, Fig. 3 zeigt einen Axialschnitt durch ein Segment mit Außen- und Innenschale, Fig. 4 zeigt in größerem Maßstab das umgreifende Kupplungsglied und Fig. 5 zeigt in größerem Maßstab das umgriffene Kupplungsglied bei einer Ausbildung nach Fig. 3.

In Fig. 1 ist ein Segment 1 dargestellt, welches eine im wesentlichen tonnenförmige Innenfläche 2' sowie eine im wesentlichen tonnenförmige Außenfläche 3 aufweist. Die Innenfläche ist von einer Innenschale 2 aus dichtem, durch Blasen in eine Form hergestelltem Kunststoff gebildet und weist nahe ihren Enden in den Bereichen a und b konische, sich nach außen erweiternde Abschnitte auf. Einstückig mit der Innenschale 2 sind Kupplungsteile 4 und 5 ausgebildet. Der geblasene Kunststoff stellt hiebei einen Stützkörper für die Aufbringung des Schaumes dar und bildet gleichzeitig eine Diffusionssperre. Auf der Innenschale 2 ist ein mit 6 bezeichneter Polyurethanhartschaum mit einem Raumgewicht von 35 bis 60 kg/m$^3$ aufgeschäumt, wobei die tonnenförmige Außenkontur durch eine entsprechende Form ausgebildet wird.

Wie aus Fig. 2 ersichtlich, lassen sich die Achsen 7 benachbarter Segmente 1 gegeneinander abwinkeln, ohne daß dies einen größeren Innendurchmesser des Hüllschlauches 8 erfordert. Es läßt sich somit in einem Hüllschlauch 8 mit vorgegebenem Innendurchmesser im Vergleich zu zylindrischen Isoliersegmenten mehr isolierender Schaum unterbringen, wodurch die Wärmedämmeigenschaften verbessert werden. Durch die Ausbildung der Segmente mit einer stützenden Innenschale 2 kann ein mechanisch weniger stabiler und thermisch besser isolierender leichterer Schaum als Material für das isolierende Segment gewählt werden, wobei auch an den Kupplungsstellen die mechanischen Kräfte unmittelbar durch das Material der Innenschale 2 unter Verringerung der mechanischen Belastung des isolierenden Schaummantels 6 aufgenommen werden. Die Kupplungsglieder 4 und 5 können hierbei so ausgebildet werden, daß sie nach dem Ineinanderstecken miteinander verrasten, so daß eine gewisse Zugfestigkeit sichergestellt ist. Insbesondere sichert diese mechanische Zugfestigkeit davor, daß bei einem Abwinkeln benachbarter Segmente 1 relativ zueinander eine Vergrößerung des Abstandes benachbarter Segmente und damit ein mehr oder minder großer nicht isolierter Zwischenraum entsteht.

Die Innenschale kann von einer Aluminiumfolie ausgekleidet oder mit einem die Reflexion verbessernden Anstrich oder Pigmenten versehen sein. Als Medienrohre, welche in der Zeichnung nicht dargestellt sind, können Weicheisenrohre, Wellrohre, Kupferrohre, vernetzte Polyäthylenrohre od. dgl. eingesetzt werden. Das Hüllrohr 8 ist flexibel, beispielsweise gewellt, ausgebildet und kann aus PVC oder Polyäthylen bestehen. Um die nötige Stützfunktion als Formkern für die Aufbringung des Polyurethanhartschaummantels zu gewährleisten, kann die Innenschale 2 als Blasteil mit einer Wandstärke von etwa 1 mm ausgebildet werden. Mit derartigen Segmenten lassen sich Krümmungsdurchmesser der isolierten Leitung von etwa 1,8 m ohne weiteres realisieren.

Die Ausführungsform nach Fig. 3, 4 und 5 unterscheidet sich von der Ausführungsform nach Fig. 1 und 2 im wesentlichen dadurch, daß der Isolierschaum von zwei Schalen umschlossen ist.

11 ist die innere Schale und 12 ist die äußere Schale des Segmentes. Die Kupplung ist als sphärische Kupplung mit einem kugelförmigen Kupplungsglied 13 ausgebildet, welches von einem hohlkugelförmigen Kupplungsglied 14 umgriffen wird. Das umgriffene Kupplungsglied 13 besteht mit der äußeren Schale 12 aus einem Stück und das umgreifende Kupplungsglied 14 besteht mit der inneren Schale 11 aus einem Stück. Die beiden Schalen 11 und 12 sind ineinander gesteckt. Die äußere Schale 12 umgreift, wie Fig. 5 zeigt, an der Stirnseite 15 des umgriffenen Kupplungsgliedes 13 mit einem nach innen ragenden Bord 16 die innere Schale 11. An der freien Stirnfläche 17 des umgreifenden Kupplungsgliedes 14 weist, wie Fig. 4 in größerem Maßstab zeigt, die innere Schale 11 einen nach außen ragenden Bord 18 und die äußere Schale 12 einen nach innen ragenden Bord 19 auf, so daß beide Schalen bei 20 stumpf aneinanderstoßen.

Der Zwischenraum zwischen der inneren Schale 11 und der äußeren Schale 12 ist mit einer Kunststoffüllung 21 ausgeschäumt. Zwischen dem umgreifenden Kupplungsteil 14 der inneren Schale 11 und der äußeren Schale 12 besteht ein Zwischenraum 22. Zwischen dem umgriffenen Kupplungsteil 13 der äußeren Schale 12 und der inneren Schale 11 besteht ein Zwischenraum 13. Die Zwischenräume 12 und 13 sind gleichfalls mit Kunststoff ausgeschäumt, so daß auch im Bereich der Kupplungsteile 3, 4 eine gute Wärmeisolation geschaffen wird.

**Patentansprüche**

1. Segment für einen aus aneinander anschließbaren und relativ zueinander abwinkelbaren Segmenten (1) bestehenden Isoliermantel für Medienrohre, insbesondere Fernheizungsleitungen, aus geschäumtem, wärmedämmendem Material, insbesondere Polyurethanhartschaum, welche Segmente von einem flexiblen Hüllrohr oder Hüllschlauch (8) umgeben sind, dadurch gekennzeichnet, daß die Innenfläche (2') und die Außenfläche (3) des Segmentes (1) als Rotationskörper mit gekrümmten Erzeugenden ausgebildet sind und im wesentlichen tonnenförmige Gestalt aufweisen, so daß — wenn der Leitung eine Krümmung aufgegeben wird — das Medienrohr an der tonnenförmigen Innenfläche (2') und der Hüllschlauch an der tonnenförmigen Außenfläche (3), der abgewinkelten Segmente (1), bei entsprechendem Krümmungsverlauf der Leitung anlegbar ist, so daß das Medienrohr und die Abwinklungen der Segmente relativ geringen mechanischen Belastungen unterworfen sind.

2. Segment nach Anspruch 1, dadurch gekennzeichnet, daß die Innenfläche (2') des Segmentes (1) nahe wenigstens einem Ende desselben sich nach außen hin konisch erweitert.

3. Segmente nach Anspruch 1 oder 2, dadurch gekennzeichnet, daß die Innenfläche (2') des Segmentes (1) als Schale (2, 11) beispielsweise aus Metall, insbesondere Aluminium, oder aus Kunststoff, insbesondere einem mit einem reflektierenden Anstrich oder reflektierenden Pigmenten versehenen Kunststoff, ausgebildet ist, welche mit Kupplungsgliedern (4, 5) für den abwinkelbaren Anschluß benachbarter Segmente (1) verbunden ist.

4. Segment nach Anspruch 1, 2 oder 3, dadurch gekennzeichnet, daß der die Innenfläche (2') der Segmente (1) umgebende Mantel aus geschlossenporigem, geschäumtem Polyurethanhartschaum (6) mit einem Raumgewicht von 35 bis 60 kg/m³ besteht.

5. Segment nach einem der Ansprüche 1 bis 4, dadurch gekennzeichnet, daß es an beiden Enden einander umgreifende kugelförmige bzw. hohlkugelförmige Kupplungsglieder aufweist.

6. Segment nach einem der Ansprüche 1 bis 4, dadurch gekennzeichnet, daß auch die Außenfläche von einer Schale (12) gebildet ist und die die Außenfläche bildende äußere Schale (12) und die die Innenfläche bildende innere Schale (11) das geschäumte Material (21, 22, 23) allseitig umschließen.

7. Segment nach Anspruch 1, dadurch gekennzeichnet, daß die äußere Schale (12) und die innere Schale (11) von getrennten und ineinander gesteckten Teilen gebildet sind.

8. Segment nach Anspruch 6 oder 7, dadurch gekennzeichnet, daß das umgriffene Kupplungsglied (13) mit der äußeren Schale (12) und das umgreifende Kupplungsglied (14) mit der inneren Schale (11) aus einem Stück besteht, und die innere Schale (11) in das umgriffene Kupplungsglied (13) unter Freilassung eines Zwischenraumes (23) für das geschäumte Material hineinragt und die äußere Schale (12) das umgreifende Kupplungsglied (14) unter Freilassung eines Zwischenraumes (22) für das geschäumte Material umgreift.

9. Segment nach Anspruch 8, dadurch gekennzeichnet, daß die äußere Schale (12) an der freien Stirnfläche (15) des umgriffenen Kupplungsgliedes (13) die innere Schale (11) umgreift und an der freien Stirnfläche (17) des umgreifenden Kupplungsgliedes (14) mit der inneren Schale (11) stumpf zusammenstößt.

10. Segment nach Anspruch 6, 8 oder 9, dadurch gekennzeichnet, daß die innere und die äußere Schale (11 und 12) einstückig aus thermoplastischem Kunststoff, insbesondere Polypropylen, ausgebildet ist.

11. Verfahren zur Herstellung eines isolierenden Segmentes nach einem der Ansprüche 1 bis 5, dadurch gekennzeichnet, daß in einem ersten Arbeitsgang eine Innenschale mit gekrümmten Erzeugenden und im wesentlichen tonnenförmiger Ausbildung sowie an dieser Innenschale, vorzugsweise einstückig mit dieser, Kupplungsstücke ausgebildet werden und daß anschließend unter Verwendung der Innenschale als Formkern auf diese Kunststoff aufgeschäumt wird.

12. Verfahren zur Herstellung eines Segmentes nach einem der Ansprüche 6 bis 10, dadurch gekennzeichnet, daß die äußere Schale über die innere Schale gesteckt und der Zwischenraum zwischen den beiden Schalen über eine zweckmäßig in der äußeren Schale vorgesehene Öff-nung mit Kunststoff, beispielsweise geschlos-senporigem Polyurethanhartschaum, ausge-schäumt wird.

13. Verfahren zur Herstellung eines Segmentes nach einem der Ansprüche 1 bis 10, dadurch gekennzeichnet, daß die innere Schale und gegebenenfalls die äußere Schale durch Blasen von Kunststoff in einer Form hergestellt wird, mit welcher auch die Kupplungsteile ausgebildet werden.

14. Verfahren zur Herstellung eines Segmentes nach einem der Ansprüche 1 bis 10, dadurch gekennzeichnet, daß der Innenmantel während des Aufschäumens unter einem Innendruck gehalten und, insbesondere durch Einblasen von Druckluft, gestützt wird.

**Claims**

1. Segment for an insulation jacket for fluid conduits, particularly distant heating pipe lines, made of foamed, heat-insulating material, particularly hard polyurethane foam, comprising segments (1) to be joined one to the other and being bendable one with respect to the other, said segments being encircled by a flexible envelope tube or envelope hose (8), characterised in that the inner surface (2') and the outer surface (3) of the segment (1) are formed as surfaces of revolution having curved generatrices and are barrel-shaped whereby when the pipe line is brought to a bent condition the fluid conduit may engage the barrel-shaped inner surface (2') and the envelope hose may engange the barrel-shaped outer surface (3) of the bent segments (1) at a respective course of curvature of the pipe line so that the fluid conduit and the bent joints of the segments are subjected to relatively low mechanical loading.

2. Segment as claimed in claim 1, characterised in that the inner surface (2') of the segment (1) at least close to one end thereof flares to the outside.

3. Segment as claimed in claim 1 or 2, characterised in that the inner surface (2') of the segment (1) is formed by a shell (2, 11), for example of metal, particularly aluminium, or of plastics material, particularly a plastics material provided with a reflecting coat of paint or with reflecting pigments, said shell being connected with coupling elements (4, 5) for the bendable connection of adjacent segments (1).

4. Segment as claimed in claim 1, 2 or 3, characterised in that the body surrounding the inner surface (2') of the segments (1) is made of a closed cell foamed hard polyurethane foam (6) having a density of from 35 to 60 kg/m$^3$.

5. Segment as claimed in any one of claims 1 to 4, characterised in that it is provided at both ends with spherical or hollow spherical coupling elements, resp., interlocking with each other.

6. Segment as claimed in any one of claims 1 to 4, characterised in that the outer surface is formed by a shell (12), too, and that the outer shell (12) forming the outer surface and the inner shell (11) forming the inner surface completely enclose the foamed material (21, 22, 23).

7. Segment as claimed in claim 1, characterised in that the outer shell (12) and the inner shell (11) are formed of separate parts fitted into each other.

8. Segment as claimed in claim 6 or 7, characterised in that the coupling element (13) being encompassed is integral with the outer shell (12) and the encompassing coupling element (14) is integral with the inner shell (11), and the inner shell (11) projects into the coupling element (13) being encompassed leaving open a space (23) for the foamed material and the outer shell (12) surrounds the encompassing coupling element (14) leaving open a space (22) for the foamed material.

9. Segment as claimed in claim 8, characterised in that the outer shell (12) overlaps the inner shell (11) at the free face (15) of the coupling element (13) being encompassed and abuts the inner shell (11) at the free face (17) of the encompassing coupling element (14).

10. Segment as claimed in claim 6, 8 or 9, characterised in that the inner and the outer shell (11 and 12), is integrally made of a thermoplastic plastics material, particularly polypropylene.

11. Method of manufacturing an insulating segment as claimed in any one of claims 1 to 5, characterised in that in a first step an inner shell having curved generatrices and a substantially barrel-shaped configuration is prepared and coupling elements are formed on this inner shell, preferably integrally therewith, and thereafter plastics material is foamed thereon by using it as mould core.

12. Method of manufacturing a segment as claimed in any one of claims 6 to 10, characterised in that the outer shell is fitted over the inner shell and the space between both said shells is foamed with plastics material, for example closed cell hard polyurethane foam, expediently via an opening in the outer shell.

13. Method of manufacturing a segment as claimed in any one of claims 1 to 10, characterised in that the inner shell and, if desired, the outer shell is produced by blow-moulding of plastics material in a mould by wich the coupling elements are formed too.

14. Method of manufacturing a segment as claimed in any one of claims 1 to 10, characterised in that an inner pressure is applied to the body inner surface during foaming and the body is supported particularly by injecting compressed air.

## Revendications

1. Segment pour une gaine isolante composée de segments (1) pouvant se raccorder les uns aux autres et s'incliner les uns par rapport aux autres, pour tuyaux de transport de fluides, notamment pour conduites de chauffage collectif, fait d'une matière transformée en mousse, isolante de la chaleur, en particulier d'une mousse de polyuréthane dure, segments qui sont entourés d'un tube fourreau ou tuyau fourreau flexible (8), caractérisé en ce que la surface intérieure (2') et la surface extérieure (3) du segment (1) sont réalisées sous la forme de corps de révolution à génératrice courbe et présentent sensiblement une configuration de tonneau, de sorte que, lorsqu'on imprime une courbure à la conduite, le tuyau de transport du fluide peut s'appliquer contre la surface intérieure (2') en forme de tonneau et le tube fourreau contre la surface extérieure (3) en forme de tonneau des segments (1) inclinés les uns par rapport aux autres, alors que la conduite prend une forme courbe voulue, de sorte que le tuyau de transport du fluide et les coudes formés par les segments sont soumis à des contraintes mécaniques relativement faibles.

2. Segment selon la revendication 1, caractérisé en ce que la surface intérieure (2) du segment (1) s'évase vers l'extérieur avec une forme conique, à proximité d'au moins une extrémité de ce segment.

3. Segment selon la revendication 1 ou la revendication 2, caractérisé en ce que la surface intérieure (2') du segment (1) est constituée par une coquille (2, 11), par exemple en métal, en particulier en aluminium, ou en matière plastique, en particulier en une matière plastique munie d'un enduit réfléchissant ou de pigments réfléchissants, cette coquille étant solidaire d'organes d'accouplement (4, 5) permettant de raccorder les segments (1) voisins de telle manière qu'on puisse les incliner les uns par rapport aux autres.

4. Segment selon l'une des revendications 1, 2 et 3 caractérisé en ce que la paroi entourant la surface intérieure (2') des segments (1) est composée d'une mousse de polyuréthane dure (6) alvéolaire, à alvéoles fermés, possédant un poids volumique de 35 à 60 kg/m$^3$.

5. Segment selon l'une des revendications 1 à 4, caractérisé en ce qu'il présente à ses deux extrémités des organes d'accouplement respectivement en forme de sphère et en forme de cavité sphérique, qui s'emboîtent l'un dans l'autre.

6. Segment selon l'une des revendications 1 à 4, caractérisé en ce que la surface extérieure est elle aussi formée d'une coquille (12) et que la coquille extérieure (12) formant la surface extérieure et la coquille intérieure (11) formant la surface intérieure entourent la matière en mousse (21, 22, 23) de tous côtés.

7. Segment selon la revendication 1, caractérisé en ce que la coquille extérieure (12) et la coquille intérieure (11) sont formées de pièces séparées et emmanchées l'une dans l'autre.

8. Segment selon la revendication 6 ou la revendication 7, caractérisé en ce que l'organe d'accouplement emboîté (13) est d'une seule pièce avec la coquille extérieure (12) et l'organe d'accouplement emboîtant (14) est d'une seule pièce avec la coquille intérieure (11) et en ce que la coquille intérieure (11) est engagée à l'intérieur de l'organe d'accouplement emboîté (13) en laissant libre un volume intermédiaire (23) recevant la matière en mousse et en ce que la coquille extérieure (12) emboîte l'organe d'accouplement emboîtant (14) en laissant libre un volume intermédiaire (22) recevant la matière en mousse.

9. Segment selon la revendication 8, caractérisé en ce que, au droit de la surface radiale libre (15) de l'organe d'accouplement emboîté (13), la coquille extérieure (12) emboîte la coquille intérieure (11) et en ce que, au droit de la surface radiale libre (17) de l'organe d'accouplement emboîtant (14), elle se raccorde bord à bord à la coquille intérieure (11).

10. Segment selon la revendication 6, la revendication 8 ou la revendication 9, caractérisé en ce que la coquille intérieure et la coquille extérieure (11 et 12) sont faites d'une seule pièce en une matière thermoplastique, en particulier en polypropylène.

11. Procédé de fabrication d'un segment isolant selon l'une des revendications 1 à 5, carctérisé en ce que, dans une première phase de travail, on forme une coquille intérieure possédant une génératrice courbe et une forme sensiblement en tonneau, ainsi que, sur cette coquille intérieure, des pièces d'accouplement qui sont de préférence d'une seule pièce avec cette coquille et que, ensuite, et en utilisant la coquille intérieure comme noyau de moule, on transforme cette matière plastique en mousse sur cette coquille.

12. Procédé de fabrication d'un segment selon l'une des revendications 6 à 10, caractérisé en ce qu'on emmanche la coquille extérieure sur la coquille intérieure et qu'on remplit de mousse, au moyen d'une matière plastique, par exemple, d'une mousse de polyuréthane dure à alvéoles fermés, le volume intermédiaire compris entre les deux coquilles, en passant par une ouverture prévue de préférence dans la coquille extérieure.

13. Procédé de fabrication d'un segment selon l'une des revendications 1 à 10, caractérisé en ce que la coquille intérieure et éventuellement la coquille extérieure sont fabriquées par soufflage d'une matière plastique dans un moule au moyen duquel on forme également les pièces d'accouplement.

14. Procédé de fabrication d'un segment selon l'une des revendications 1 à 10, caractérisé en ce que, pendant la formation de la mousse, la paroi intérieure est maintenue sous une pression intérieure et soutenue, en particulier par insufflation d'air comprimé.

## FIG.1

FIG.2

FIG.3

FIG.4

FIG.5